# NEUE EUROPÄISCHE PATENTSCHRIFT

(11) **EP 2 890 821 B2**
(45) Veröffentlichungstag und Bekanntmachung des Hinweises auf die Entscheidung über den Einspruch: **10.05.2023**
(45) Hinweis auf die Patenterteilung: 10.01.2018
(21) Anmeldenummer: 13750297.7
(22) Anmeldetag: 13.08.2013
(51) Int. Cl.: C21D 9/48, C22C 38/02, B21D 22/02, B62D 29/00, C21D 1/673, C23C 24/08

(54) **VERFAHREN UND FERTIGUNGSANLAGE ZUM HERSTELLEN EINES WARMUMGEFORMTEN ODER PRESSGEHÄRTETEN BLECHFORMTEILS MIT EINER METALLISCHEN KORROSIONSSCHUTZBESCHICHTUNG, SOWIE HIERMIT HERGESTELLTES BLECHFORMTEIL UND FAHRZEUGKAROSSERIE MIT SOLCHEM BLECHFORMTEIL**
METHOD AND PRODUCTION FACILITY FOR PRODUCING A HOT-FORMED OR PRESS-HARDENED SHAPED SHEET METAL PART WITH A METALLIC CORROSION PROTECTION COATING, SHAPED SHEET METAL PART PRODUCED THEREWITH AND MOTOR VEHICLE BODY WITH SUCH SHAPED SHEET METAL PART
PROCÉDÉ ET INSTALLATION DE FABRICATION POUR PRODUIRE UNE PIÈCE FAÇONNÉE EN TÔLE THERMOFORMÉE OU TREMPÉE À LA PRESSE, COMPORTANT UN REVÊTEMENT ANTICORROSION MÉTALLIQUE, ET PIÈCE FAÇONNÉE EN TÔLE AINSI PRODUITE ET CARROSSERIE DE VÉHICULE ÉQUIPÉE D'UNE TELLE PIÈCE FAÇONNÉE EN TÔLE

(30) Priorität: 31.08.2012 DE 102012215512
(43) Veröffentlichungstag der Anmeldung: 08.07.2015
(73) Patentinhaber: Bayerische Motoren Werke Aktiengesellschaft, 80809 München (DE)
(72) Erfinder: ACKERMANN, Moritz, 70192 Stuttgart (DE)
(86) Internationale Anmeldenummer: PCT/EP2013/066854
(87) Internationale Veröffentlichungsnummer: WO 2014/032957

(56) Entgegenhaltungen:
- EP-A2- 2 239 350
- DE-A1- 10 348 086
- DE-A1-102008 055 716
- DE-A1-102009 034 869
- DE-B3-102006 006 910
- DE-B3-102006 006 910

## Beschreibung

Die Erfindung betrifft ein Verfahren zum Herstellen eines mit einer metallischen Korrosionsschutzbeschichtung versehenen und aus einem höherfesten Stahlblechmaterial gebildeten Blechformteils.

Insbesondere im Kraftfahrzeugbau werden zunehmend Blechformteile eingesetzt, die aus einem höherfesten Stahlblechmaterial (wie nachfolgend noch näher definiert) gebildet sind, um einerseits den steigenden Sicherheitsanforderungen und andererseits den zunehmenden Bemühungen um Gewichtsreduktion Rechnung zu tragen. Um solche Blechformteile vor Korrosion zu schützen, haben sich metallische Korrosionsschutzbeschichtungen als vorteilhaft erwiesen (Prinzip des kathodischen Korrosionsschutzes).

Um solche Blechformteile, d. h. Blechformteile die aus einem höherfesten Stahlblechmaterial gebildet sind und die eine metallische Korrosionsschutzbeschichtung aufweisen, herzustellen, sind aus dem Stand der Technik zwei grundlegend verschiedene Vorgehensweisen bekannt.

Bei einer ersten Vorgehensweise wird ein bereits mit einer metallischen Korrosionsschutzbeschichtung versehenes Ausgangsblechmaterial bereitgestellt und zu einem Blechformteil verarbeitet. Ein solches Ausgangsblechmaterial, das auch zum Warmumformen und insbesondere zum Presshärten geeignet ist, ist in der DE 20 2004 021 264 U1 beschrieben.

Bei einer zweiten Vorgehensweise wird ein zunächst blankes Ausgangsblechmaterial zu einem Blechformteil verarbeitet. Anschließend wird das noch blanke Blechformteil durch Aufbringen einer metallischen Korrosionsschutzbeschichtung beschichtet (so genannte Bauteilbeschichtung). Diesbezüglich wird auf die DE 10 2009 053 368 A1 derselben Anmelderin hingewiesen.

Die DE 10 348 086 offenbart das Presshärten von Karosseriebauteilen mit Zugfestigkeiten über 1350 MPa. Die Zinkbeschichtung wird dabei durch ein Sheradisierverfahren aufgebracht. Die aus dem Stand der Technik bekannten Möglichkeiten zum Herstellen von Blechformteilen, die aus einem höherfesten Stahlblechmaterial gebildet sind und die eine metallische Korrosionsschutzbeschichtung aufweisen, haben spezifische Nachteile.

Es ist daher eine Aufgabe der vorliegenden Erfindung, eine Möglichkeit zum Herstellen solcher Blechformteile anzugeben, die die mit dem Stand der Technik einhergehenden Nachteile nicht oder zumindest nur in einem verminderten Umfang aufweist.

Diese Aufgabe wird gelöst durch ein erfindungsgemäßes Verfahren mit den Merkmalen des Anspruchs 1. Bevorzugte Weiterbildungen und Ausgestaltungen ergeben sich analog für alle Erfindungsgegenstände sowohl aus den abhängigen Ansprüchen als auch aus den nachfolgenden Erläuterungen.

Das erfindungsgemäße Verfahren zum Herstellen eines mit einer metallischen Korrosionsschutzbeschichtung versehenen und aus einem höherfesten Stahlblechmaterial gebildeten Blechformteils umfasst zumindest die folgenden Schritte:
- Presshärten eines bereitgestellten Ausgangsblechmaterials zu einem Blechformteil; und
- Beschichten des Blechformteils mit einer Zinklamellenbeschichtung bzw. mit einem Zinklamellenüberzug.

Unter einer Zinklamellenbeschichtung bzw. einem Zinklamellenüberzug wird eine nicht-elektrolytisch aufgebrachte Beschichtung bzw. ein nicht-elektrolytisch aufgebrachter Überzug aus Zinklamellen oder aus Zink- und Aluminiumlamellen, die durch eine anorganische Matrix verbunden sind, verstanden. Hierbei wird das Beschichtungsmaterial für die Zinklamellenbeschichtung in flüssiger Form (Suspension) bereitgestellt und kann dann durch Aufsprühen auf das Blechformteil aufgebracht werden. Erfindungsgemäß ist jedoch das Eintauchen des Blechformteils in ein Tauchbad, Tauchbecken oder dergleichen vorgesehen, wobei auch schlecht zugängliche Stellen am Blechformteil, wie bspw. Hinterschneidungen und Hohlräume und dergleichen (die durch Aufsprühen in der Regel nicht zugänglich sind), beschichtet und insbesondere flächendeckend und gleichmäßig beschichtet werden können. Anschließend wird die aufgetragene Zinklamellenbeschichtung in einem Ofen oder dergleichen unter kontrollierter Temperatur eingebrannt (die flüssige Phase wird hierbei verdampft und die Lamellen verbinden bzw. vernetzen sich zu einem Film), wobei sich eine kompakte und verhältnismäßig abriebfeste zinkhaltige Korrosionsschutzbeschichtung ausbildet. Typische Einbrenntemperaturen liegen im Bereich von ca. 200 °C bis ca. 240 °C, können jedoch auch darunter oder darüber liegen. Diese Temperaturen sind im Hinblick auf die Festigkeit des Stahlblechmaterials weitgehend unbedenklich. D. h. die mechanischen Kennwerte des Stahlblechmaterials bleiben weitgehend erhalten.

Beim Beschichten wird die Zinklamellenbeschichtung zumindest bereichsweise, bevorzugt vollflächig und insbesondere beidseitig und vollflächig auf das Blechformteil aufgebracht. Das Beschichten kann direkt im Anschluss an das Warmumformen erfolgen, wobei zwischen dem Warmumformen und dem Beschichten Zwischenschritte vorgesehen sein können, wie nachfolgend näher erläutert. Das Aufbringen der Zinklamellenbeschichtung kann aber auch zeitlich und/oder räumlich vom Warmumformen getrennt sein und bspw. bei einem Zulieferer bzw. Lohnfertiger erfolgen.

Erfindungsgemäß ist vorgesehen, dass die Zinklamellenbeschichtung mehrere Einzelschichten umfasst, die in mehreren Aufbringschritten und Einbrennschritten (bzw. Aushärteschritten) aufgebracht werden bzw. aufgebracht worden sind.

Ein mit dem erfindungsgemäßen Verfahren hergestelltes Blechformteil ist aus einem höherfesten Stahlblechmaterial gebildet. Unter einem höherfesten Stahlblechmaterial wird vorrangig ein Blechmaterial aus einem Stahlwerkstoff verstanden, dessen Zugfestigkeit mindestens 1400 MPa beträgt. Die Bezeichnung "höherfestes Stahlblechmaterial" schließt somit auch hoch- und höchstfeste Stahlblechmaterialien mit ein. Es ist jedoch nicht zwingend erforderlich, dass bereits das Ausgangsblechmaterial höherfeste Eigenschaften aufweist. Vielmehr können die höherfesten Eigenschaften auch erst im Verlaufe des erfindungsgemäßen Verfahrens herausgebildet bzw. erworben werden, bspw. durch einen Härtevorgang und insbesondere durch einen Presshärtevorgang, wie nachfolgend noch näher erläutert.

Bei dem Stahlblechmaterial handelt es sich erfindungsgemäß um ein Feinblech mit einer Blechstärke von maximal 3,0 mm. Das Umformen erfolgt bevorzugt in einem Tiefziehprozess oder einem hierzu vergleichbaren Prozess.

Ein wesentlicher Vorteil der Erfindung ist darin zu sehen, dass das Umformen mit einem blanken Stahlblechmaterial erfolgen kann, wodurch sich der Umformprozess einfach gestalten lässt. Da die metallische Korrosionsschutzbeschichtung erst nach dem Umformen auf das Blechmaterial aufgebracht wird, kann diese auch nicht beim Umformen beschädigt werden. Ferner können beim Beschichten etwaige Kantenflächen (Schnittflächen) am Blechformteil mit abgedeckt werden, wodurch ein verbessertes Kantenkorrosionsverhalten erreicht wird. Dies führt auch dazu, dass das mit einer Zinklamellenbeschichtung beschichtete Blechformteil optisch gefällig und somit auch im Sichtbereich einsetzbar ist. Ein wesentlicher Vorteil der Erfindung ist auch darin zu sehen, dass die nach dem Umformen aufgebrachte Zinklamellenbeschichtung einen sehr hohen Reinheitsgrad aufweist, was im Hinblick auf den Korrosionsschutz und die Lackierfähigkeit von Vorteil ist.

Es ist vorgesehen, dass das Warmumformen ein so genanntes Presshärten (bzw. Formhärten) des Ausgangsblechmaterials einschließt (d h. Warmumformen einschließlich Presshärten eines bereitgestellten Ausgangsblechmaterials zu einem pressgehärteten Blechformteil). Hierzu ist insbesondere vorgesehen, dass das Ausgangsblechmaterial ein presshärtungsgeeignetes Stahlblechmaterial ist, wie z. B. ein 16MnB5, ein 19MnB5 oder ein 22MnB5. Zum Presshärten sind verschiedene Vorgehensweisen möglich. Gemäß einer ersten Vorgehensweise wird eine erwärmte Platine des Ausgangsmaterials in ein Umformwerkzeug bzw. Presshärtewerkzeug eingelegt, hierin umgeformt und gleichzeitig oder nachfolgend unter Druck abgekühlt, wobei die Festigkeit des Stahlwerkstoffs aufgrund metallurgischer Veränderungen angehoben wird. Diese im Rahmen der Erfindung bevorzugte Vorgehensweise kann auch als direktes Presshärten bezeichnet werden. Bei einer zweiten Vorgehensweise wird aus der Platine zunächst durch Umformen ein Zwischen-Blechformteil erzeugt (Vorformen), welches dann erwärmt und in das Presshärtewerkzeug eingelegt wird, wo unter einer nur noch geringen Formänderung oder Formerhaltung das Presshärten erfolgt. Diese Vorgehensweise kann auch als indirektes Presshärten bezeichnet werden.

Durch den Einschluss eines Presshärtens (wie vorausgehend erläutert) umfasst das erfindungsgemäße Verfahren zumindest die folgenden Schritte:
- Presshärten eines bereitgestellten Ausgangsblechmaterials zu einem pressgehärteten Blechformteil, insbesondere wie vorausgehend beschrieben; und
- Beschichten des Blechformteils mit einer Zinklamellenbeschichtung.

Es ist vorgesehen, dass das Blechformteil vor dem Aufbringen der Zinklamellenbeschichtung gereinigt wird. Das Reinigen kann bspw. ein Nassreinigen, ein Schleifen, ein Bürsten, ein Strahlen mit abrasiven Mitteln oder dergleichen sein. Dem Reinigen kann sich optional eine nasschemische Vorbehandlung anschließen, wie nachfolgend noch näher erläutert.

Die Schichtdicke der aufgebrachten bzw. aufzubringenden Zinklamellenbeschichtung kann bis zu 45 µm, bevorzugt bis zu 30 µm und insbesondere bis zu 20 µm betragen. Die Zinklamellenbeschichtung kann somit verhältnismäßig dick sein und dadurch einen guten Korrosionsschutz bieten. Ebenso kann die Schichtdicke der aufgebrachten bzw. aufzubringenden Zinklamellenbeschichtung im Bereich von 3 µm bis 45 µm, bevorzugt im Bereich von 5 µm bis 30 µm und insbesondere im Bereich von 5 µm oder 10 µm bis 20 µm liegen. Bevorzugt handelt es sich um eine Zinklamellenbeschichtung mit einer homogenen Schichtdicke. Die Zinklamellenbeschichtung weist mehrere Einzelschichten auf, wie bereits erläutert.

Auf die Zinklamellenbeschichtung kann noch wenigstens eine weitere Beschichtung aufgebracht werden. D. h. das nach dem erfindungsgemäßen Verfahren hergestellte Blechformteil weist insbesondere auch eine weitere auf die Zinklamellenbeschichtung aufgebrachte Beschichtung auf. Eine solche weitere Beschichtung ist insbesondere eine Lackschicht, die mehrere Einzelschichten umfassen kann. Eine weitere Beschichtung kann bspw. eine so genannte KTL-Beschichtung sein, die in einer kathodischen Tauchlackierung auf die Zinklamellenbeschichtung aufgebracht wird bzw. aufgebracht wurde.

Das erfindungsgemäße Verfahren kann weitere, im Einzelnen hier nicht erläuterte Schritte und Zwischenschritte umfassen, wie z. B. das Beschneiden der Blechformteile vor oder nach dem Beschichten. Die Schritte des Verfahrens werden bevorzugt automatisiert ausgeführt, bspw. auf einer beispielhaften Fertigungsanlage.

Die beispielhafte Fertigungsanlage dient zur Durchführung des erfindungsgemäßen Verfahrens. Diese Fertigungsanlage umfasst zumindest:
- eine Werkzeugvorrichtung zum Warmumformen und insbesondere zum Presshärten eines Ausgangsblechmaterials oder eines Zwischen-Blechformteils, bzw. zum Erzeugen eines warmumgeformten oder pressgehärteten Blechformteils; und
- eine Beschichtungsvorrichtung zum Beschichten des Blechformteils mit einer Zinklamellenbeschichtung.

Bei der Werkzeugvorrichtung handelt es sich vorzugsweise um ein Warmumformwerkzeug und insbesondere um ein Presshärtewerkzeug. Die Fertigungsanlage kann ferner eine Ofeneinrichtung zum Erwärmen des Ausgangsblechmaterials (oder des Zwischen-Blechformteils) vor dem Warmumformen bzw. Presshärten umfassen. Hierbei kann es sich z. B. um einen Kammerofen oder um einen Durchlaufofen handeln. Die Beschichtungsvorrichtung kann eine Sprüheinrichtung oder ein Tauchbad (oder dergleichen) zum Aufbringen einer in flüssigen Form (Suspension) bereitgestellten Zinklamellenbeschichtung aufweisen. Ferner kann die Beschichtungsvorrichtung eine Ofeneinrichtung zum Einbrennen der Zinklamellenbeschichtung aufweisen. Hierbei kann es sich z. B. um einen Kammerofen oder um einen Durchlaufofen handeln. Zur Fertigungsanlage können auch Transport- und Handhabungseinrichtungen gehören, die insbesondere ein automatisiertes Ausführen des erfindungsgemäßen Verfahrens ermöglichen.

Ein beispielhaftes Blechformteil ist ein warmumgeformtes und pressgehärtetes Blechformteil, das eine Zinklamellenbeschichtung aufweist. Dieses Blechformteil ist insbesondere nach dem erfindungsgemäßen Verfahren und/oder mit der beispielhaften Fertigungsanlage hergestellt. Bei diesem Blechformteil handelt es sich insbesondere um ein Struktur- und/oder um ein Sicherheitsbauteil für ein Kraftfahrzeug bzw. für eine Kraftfahrzeugkarosserie, wobei ein solches Struktur- und/oder Sicherheitsbauteil bspw. ein Türaufprallträger (Seitenaufprallträger), eine A- oder B-Säule, ein Längs- oder Querträger, eine Stoßfängerverstärkung oder dergleichen ist. Bevorzugt handelt es sich bei dem Blechformteil um einen Seitenaufprallträger, der in einer Seitentür eines Kraftfahrzeugs bzw. einer Kraftfahrzeugkarosserie verbaut werden kann.

Eine beispielhafte Fahrzeugkarosserie bzw. Kraftfahrzeugkarosserie umfasst wenigstens ein warmumgeformtes und insbesondere pressgehärtetes Blechformteil mit einer Zinklamellenbeschichtung. Insbesondere handelt es sich um eine Fahrzeugkarosserie für einen Personenkraftwagen. Vorzugsweise ist das wenigstens eine warmumgeformte und insbesondere pressgehärtete Blechformteil mit der Zinklamellenbeschichtung mechanisch in die Fahrzeugkarosserie eingefügt. Ein mechanisches Einfügen kann bspw. durch Verschrauben, Verstiften, Vernieten und dergleichen erfolgen. Das warmumgeformte und insbesondere pressgehärtete Blechformteil mit der Zinklamellenbeschichtung kann zusätzlich beschichtet und insbesondere lackiert sein, wie bereits erläutert.

Die Erfindung wird nachfolgend anhand der Figuren beispielhaft näher erläutert. Die in den Figuren gezeigten und/oder nachfolgend erläuterten Merkmale können, unabhängig von konkreten Merkmalskombinationen, zugleich allgemeine Merkmale der Erfindung sein.
- Fig. 1: zeigt ein beispielhaftes Blechformteil in einer Draufsicht.
- Fig. 2: zeigt ein erfindungsgemäßes Verfahren zum Herstellen des in Fig. 1 gezeigten Blechformteils in einer schematischen Ablaufdarstellung.

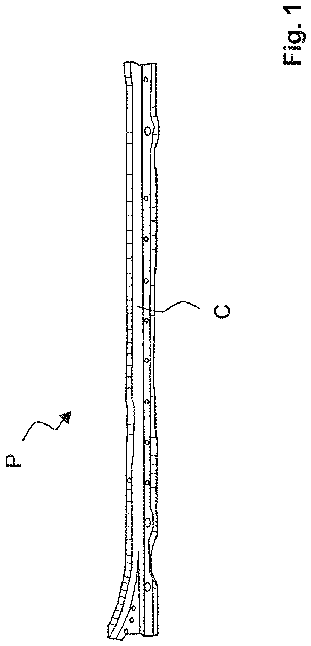

**Fig. 1** zeigt ein pressgehärtetes Blechformteil P mit einer als Zinklamellenbeschichtung ausgebildeten metallischen Korrosionsschutzbeschichtung C. Bei dem Blechformteil P handelt es sich beispielhaft um ein Verstärkungsteil für den Seitenschweller eines Kraftfahrzeugs, insbesondere eines Personenkraftwagens, bzw. einer Kraftfahrzeugkarosserie. Die Zinklamellenbeschichtung C ist beidseitig und vollflächig aufgebracht und deckt auch alle Kantenflächen mit ab.

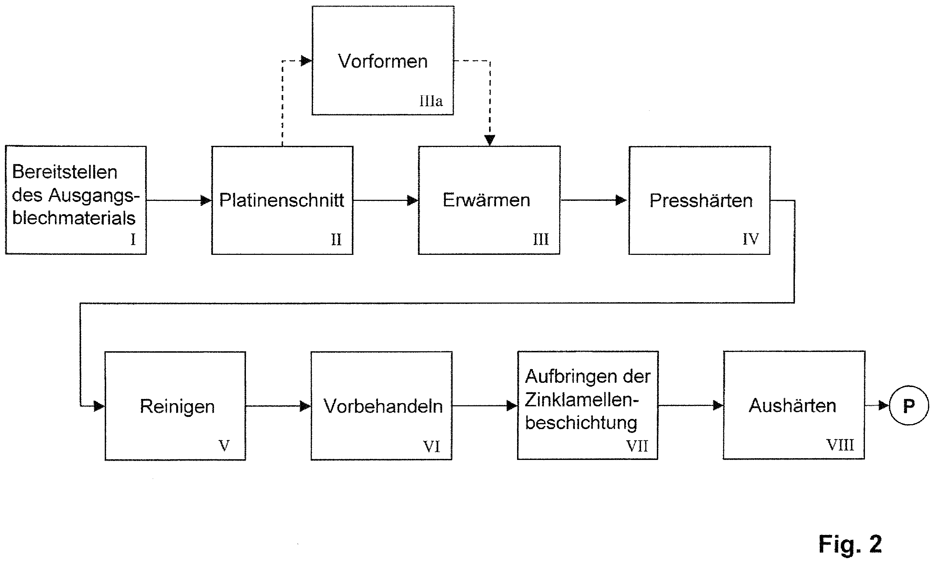

Nachfolgend wird im Zusammenhang mit der **Fig. 2** ein erfindungsgemäßes Verfahren zum Herstellen des Blechformteils P näher erläutert.

Das erfindungsgemäße Verfahren beginnt im Schritt I [Bereitstellen des Ausgangsblechmaterials] mit der Bereitstellung eines Ausgangsblechmaterials, wobei es sich um ein für das Presshärten geeignetes Stahlblechmaterial handelt. Das Ausgangsblechmaterial kann z. B. als Coil oder in Form von Einzelplatinen bereitgestellt werden.

Im Schritt II [Platinenschnitt] wird aus dem ebenen Ausgangsblechmaterial ein Platinenzuschnitt erzeugt, wobei die Schnittgeometrie idealerweise so gewählt ist, dass nachfolgend keine weiteren Schnittoperationen erforderlich sind.

Im Schritt III [Erwärmen] wird der Platinenzuschnitt erwärmt, was idealerweise in einem Durchlaufofen erfolgt. Diesem Erwärmen kann im Schritt IIIa [Vorformen] optional ein Vorformen des Platinenzuschnitts zu einem Zwischen-Blechformteil erfolgen, wobei dieses Zwischen-Blechformteil annähernd die Endgeometrie des herzustellenden Blechformteils P aufweisen kann (so genanntes indirektes Presshärten, wie obenstehend erläutert).

Im Anschluss an das Erwärmen des Platinenzuschnitts oder des Zwischen-Blechformteils erfolgt im Schritt IV [Presshärten] das Presshärten in einem Presshärtewerkzeug, um ein pressgehärtetes Blechformteil zu erhalten.

Im Anschluss an das Presshärten wird das pressgehärtete Blechformteil im Schritt V [Reinigen] gereinigt, um Verunreinigungen, wie insbesondere Brandrückstände und Oxidschichten, zu entfernen und um im Wesentlichen metallisch blanke Oberflächen zu erhalten.

Nach dem Reinigen wird das blanke Blechformteil im Schritt VI [Vorbehandeln] einer nasschemischen Vorbehandlung unterzogen. Beim nasschemischen Vorbehandeln kann das Blechformteil bspw. mit einer Phosphatierung (z. B. Zn-Phosphatierung, Zn/Fe-Phosphatierung, Tri-Kationen-Phosphatierung und dergleichen) versehen werden, was insbesondere durch Aufsprühen auf das Blechformteil oder Eintauchen des Blechformteils erfolgt. Eine beim nasschemischen Vorbehandeln aufgebrachte Schicht dient in erster Linie als Haftvermittler für die nachfolgend aufzubringende Zinklamellenbeschichtung.

Im Anschluss an das Reinigen und nasschemische Vorbehandeln wird auf das pressgehärtete Blechformteil im Schritt VII [Aufbringen der Zinklamellenbeschichtung] die Zinklamellenbeschichtung in flüssiger Form (Suspension) aufgebracht, was durch Eintauchen des Blechformteils in ein Tauchbad bzw. Tauchbecken (oder dergleichen) erfolget, wobei insbesondere auch die Kantenflächen am Blechformteil beschichtet werden.

In einem Schritt VIII [Aushärten] wird die noch flüssige Zinklamellenbeschichtung in einem Ofen ausgehärtet, ohne dass hierbei die zuvor beim Presshärten erzielte Festigkeit des Stahlwerkstoffs beeinträchtigt wird.

Das zuvor beispielhaft erläuterte Verfahren kann weitere hier nicht erläuterte Schritte und Zwischenschritte umfassen, wie z. B. Schneid- bzw. Beschneideoperationen (die insbesondere vor dem Aufbringen der Zinklamellenbeschichtung durchgeführt werden), Zwischenreinigungsmaßnahmen, Beölungsmaßnahmen, Qualitätssicherungsmaßnahmen, Lackierungsmaßnahmen und dergleichen.

## Patentansprüche

1. Verfahren zum Herstellen eines mit einer metallischen Korrosionsschutzbeschichtung versehenen und aus einem höherfesten Stahlblechmaterial mit einer Blechstärke von maximal 3 mm und einer Zugfestigkeit von mindestens 1400 MPa gebildeten Blechformteils (P), umfassend die folgenden Schritte:
- Presshärten eines bereitgestellten blanken Ausgangsblechmaterials zu einem pressgehärteten Blechformteil;
- Reinigen des pressgehärteten Blechformteils; und
- Beschichten des pressgehärteten Blechformteils durch Eintauchen in ein Tauchbad mit einer mehrere Einzelschichten umfassenden Zinklamellenbeschichtung (C), die in mehreren Aufbringschritten und Einbrennschritten aufgebracht worden ist.

2. Verfahren nach Anspruch 1,
**dadurch gekennzeichnet, dass**
die Schichtdicke der Zinklamellenbeschichtung (C) bis zu 45 µm, bevorzugt bis zu 30 µm und insbesondere bis zu 20 µm beträgt.

3. Verfahren nach Anspruch 1 oder 2,
**dadurch gekennzeichnet, dass**
auf die Zinklamellenbeschichtung (C) eine weitere Beschichtung, wie insbesondere eine Lackschicht, aufgebracht wird.

## Claims

1. Method for producing a shaped sheet metal part (P) provided with a metallic anti-corrosion coating and formed from a higher-strength steel sheet material with a sheet thickness of not more than 3 mm and a tensile strength of at least 1400 MPa, comprising the following steps:
- press-hardening a blank starting sheet metal material which is provided, to give a press-hardened shaped sheet metal part;
- cleaning the press-hardened shaped sheet metal part; and
- coating the press-hardened shaped sheet metal part by immersion in a dip bath with a zinc flake coating (C) comprising a plurality of individual layers and having been applied in a plurality of application steps and baking steps.

2. Method according to Claim 1,
**characterized in that**
the layer thickness of the zinc flake coating (C) is up to 45 µm, preferably up to 30 µm and especially up to 20 µm.

3. Method according to Claim 1 or 2,
**characterized in that**
a further coating, such as especially a paint layer, is applied to the zinc flake coating (C).

## Revendications

1. Procédé permettant d'obtenir une pièce usinée en tôle (P) équipée d'un revêtement anticorrosion métallique et réalisée en un matériau de tôle d'acier de grande résistance ayant une épaisseur de tôle de maximum 3 mm et une résistance à la traction d'au moins 1 400 MPa, comprenant les étapes suivantes :
- tremper à la presse un matériau en tôle de départ blanc fourni pour obtenir une pièce usinée en tôle trempée à la presse,
- nettoyer la pièce usinée en tôle trempée à la presse, et
- revêtir la pièce usinée trempée à la presse d'un revêtement en zinc lamellaire (C) comprenant plusieurs couches individuelles par immersion dans un bain d'immersion, qui a été appliqué en plusieurs étapes d'application et étapes de cuisson.

2. Procédé selon la revendication 1,
**caractérisé en ce que**
l'épaisseur de couche du revêtement en zinc lamellaire (C) va jusqu'à 45 µm, de préférence jusqu'à 30 µm et en particulier jusqu'à 20 µm.

3. Procédé selon la revendication 1 ou 2,
**caractérisé en ce que**
sur le revêtement en zinc lamellaire (C) est appliqué un autre revêtement tel qu'en particulier une couche de vernis.
